# EUROPÄISCHE PATENTANMELDUNG

(11) **EP 2 017 764 A2**
(43) Veröffentlichungstag der Anmeldung: **21.01.2009**
(21) Anmeldenummer: 07013876.3
(22) Anmeldetag: 16.07.2007
(51) Int. Cl.: G06F 21/20

(54) **Benutzerschnittstelle zur sicheren Eingabe eines Codes**

(30) Priorität: 02.07.2007 EP 07012890
(71) Anmelder: Albis Technologies AG, 8047 Zürich (CH)
(72) Erfinder: Roth, Stephan, 8956 Kilwangen (CH)
(74) Vertreter: Kley, Hansjörg

(57) **Zusammenfassung**

Online-Transaktionen zwischen einem Rechner (1) und einem Dienste-Anbieter (2) tragen das Risiko, dass zwar zwischen Rechner (1) und Dienste-Anbzeter (2) eine gesicherte Verbindung (15) vorhanden ist, jedoch zwischen Rechner (1) und Benutzer (40) durch Malware die Kommunikation offen ist. Zur Sicherstellung wird eine Benutzerschnittstelle (GUI) vorgeschlagen, bei der die einzugebenden Zeichen (42) nicht über die Tastatur (30), sondern über ein graphische Darstellung (41), z.B. ein Drehrad erfolgt. Dadurch kann allfällig vorhandene Malware einen eingegebenen Code nicht aufzeichnen.

## Beschreibung

Die Erfindung bezieht sich auf eine Benutzerschnittstelle zur sicheren Eingabe eines Codes nach dem Oberbegriff des Patentanspruches 1.

Elektronische Online-Dienste für E-Banking, Bestellen von Medien oder Dienstleistungen haben eine grosse Verbreitung gefunden. Von besonderer Bedeutung ist die sichere Abwicklung dieser administrativen Vorgänge.

### Zur sicheren Abwicklung solcher Online-Vorgänge ist in

EP 1 255 178 B1 [2] eine Sicherheitsvorrichtung offenbart. Bei der Ausgabe eines Passwortes nach einem Challenge-/Response-Prinzip an einem Bildschirm erfolgt dies nicht im Klartext, sondern in Form eines Musters - auch Flickering genannt -. Die vorgenannte Sicherheitsvorrichtung kann das vom Bildschirm ausgegebene Muster erkennen und den Benutzer auffordern, zur Authentifizierung einen Code einzugeben oder mittels eines biometrischen Sensors seine Identität zu offenbaren. Daraufhin wird von der Sicherheitsvorrichtung ein Passwort ausgegeben, das von der betreffenden Person an der Tastatur einzugeben ist.

Von der gleichen Anmelderin wie bei der vorgenannten Schrift EP 1 255 178 B1 [2] wurde ferner in EP 1 713 230 A1 [1] ein Verfahren vorgeschlagen, das unsichere bzw. ungesicherte Kommunikationswege benutzt, um aufgrund einer übermittelten Identität eines Benutzers diesem über eine sichere Verbindung eine geheime URL zu übermitteln.

Die vorgenannten zwei Lösungen stellen eine Verbesserung dar, sie genügen jedoch den Sicherheitsanforderungen nicht, da ein Rechner grundsätzlich als unsicher zu betrachten ist, d.h. die Anwesenheit von «Malware» ist anzunehmen. Diese Malware ist in der Lage insbesondere Eingaben über die Tastatur zu «tracen» und über eine Verbindung einem Dritten zugänglich zu machen.

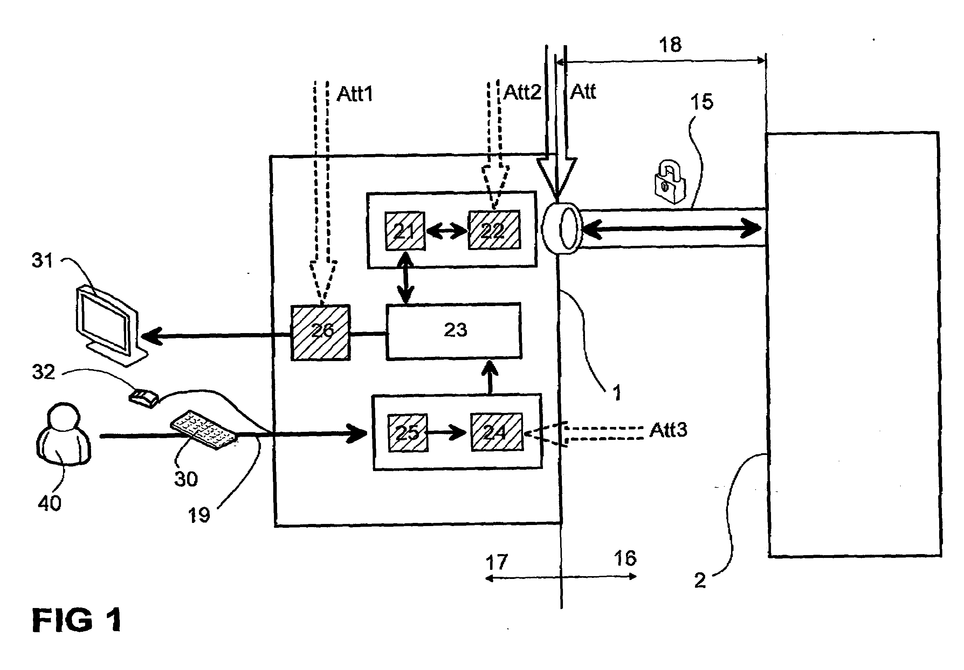

In der Fig. 1 sind die üblichen mit «Att1», «Att2» und «Att3» bezeichneten Angriffspunkte auf einen Rechner 1 bei einem Benutzer 40 zuhause oder in einem Büro dargestellt; mit «Att» ist der physische Zugangs- oder Angriffspunkt von aussen über ein Port ausserhalb der gesicherten Kommunikationsverbindung dargestellt. Dieser Rechner 1 unterhält eine gesicherte Kommunikationsverbindung 15 mit einem Dienste-Anbieter 2. Bei diesem Rechner 1 wird unterstellt, dass dieser hochgradig kompromittiert ist und somit im folgenden Kontext als kompromittierter Rechner 1 bezeichnet wird. Mit dem Bezugszeichen 23 ist eine Anwendung, z.B. ein Browser dargestellt. Insbesondere die schraffiert dargestellten «Komponenten» und die Ressourcen dieses Rechners 1 wie Tastatur 30, Maus 32 und Bildschirm 31 sind von einem beliebigen Punkt aus dem Internet als zugreifbar zu betrachten. «Komponenten» heisst hier:
- Malware 21 in Form eines HTTP-Filters;
- Malware 22 in Form einer HTTP-Replace Engine;
- Malware 24 in Form eines Key-Loggers;
- Malware 25 in Form einer Key-Replace-Engine;
- Malware 26 in Form einer Videomaskierung.

Die in EP 1 255 178 B1 [2] offenbarte Sicherheitsvorrichtung erlaubt zweifellos eine sichere Authentifizierung eines Benutzers, der nachfolgende Online-Dialog über einen mit Malware geladenen Rechner 1 ist und bleibt ungeschützt. Dies ist unmittelbar aus der vorangehenden Darstellung gemäss der Figur 1 ersichtlich.

Für sicherheitsrelevante Anwendungen wie etwa Internetbanking werden Kartenleser in Sicherheitsklassen eingeteilt:
a) Lesegeräte der Klasse 1 können lediglich über Kontakte mit der Karte kommunizieren.
b) Lesegeräte der Klasse 2 besitzen zusätzlich zur Klasse 1 eine eingebaute Tastatur, welche der sicheren Eingabe einer Persönliche Identifikationsnummer PIN dient.
c) Lesegeräte der Klasse 3 setzen zusätzlich zur Klasse 2 noch eine sichere Datenausgabe durch ein eingebautes Display voraus.

Ausgehend von diesem Stand der Technik stellt sich das Problem, eine Benutzerschnittstelle zur sicheren Eingabe eines Codes bereitzustellen, die auch für mit Malware geladenen Rechnern nicht ermöglicht, eingegebene Daten im Klartext aus einer Online-Transaktion an eine dritte Stelle weiterzuleiten.

Diese Aufgabe wird erfindungsgemäss für eine Benutzerschnittstelle durch die im Patentanspruch 1, angegebenen Merkmale gelöst.

Die Eingabe der PIN erfolgt auf dem PC durch bedienen eines grafischen Interfaces mit einem Eingabemittel, beispielsweise mit einer Computermaus. Dies kann beispielsweise das Betätigen eines Drehrades analog zu einem Tresor sein. In der folgenden Beschreibung wird von einem grafischen Interface entsprechend der untenstehenden Zeichnung ausgegangen.

Vorteilhafte Weiterbildungen der Erfindung sind Gegenstand der abhängigen Ansprüche.

Die Erfindung wird nachstehend anhand der Zeichnung beispielsweise erläutert. Es zeigen:
- Figur 1: Darstellung der üblichen Angriffspunkte in einem/auf einen kompromittierten Rechner;
- Figur 2: Darstellung involvierter Komponenten zur Benutzerschnittstelle;
- Figur 3: Detaildarstellung einer Ausführungsform der erfindungsgemässen graphischen Benutzerschnittstelle mit einem Drehrad;
- Figur 4: Detaildarstellung einer Ausführungsform der erfindungsgemässen graphischen Benutzerschnittstelle mit einem verschiebbaren Balken.

Die Beschreibung von Ausführungsformen der vorliegenden Erfindung basiert stets für einen infizierten oder hochgradig kompromittierten Rechner 1, wie er in der Fig. 1 dargestellt ist.

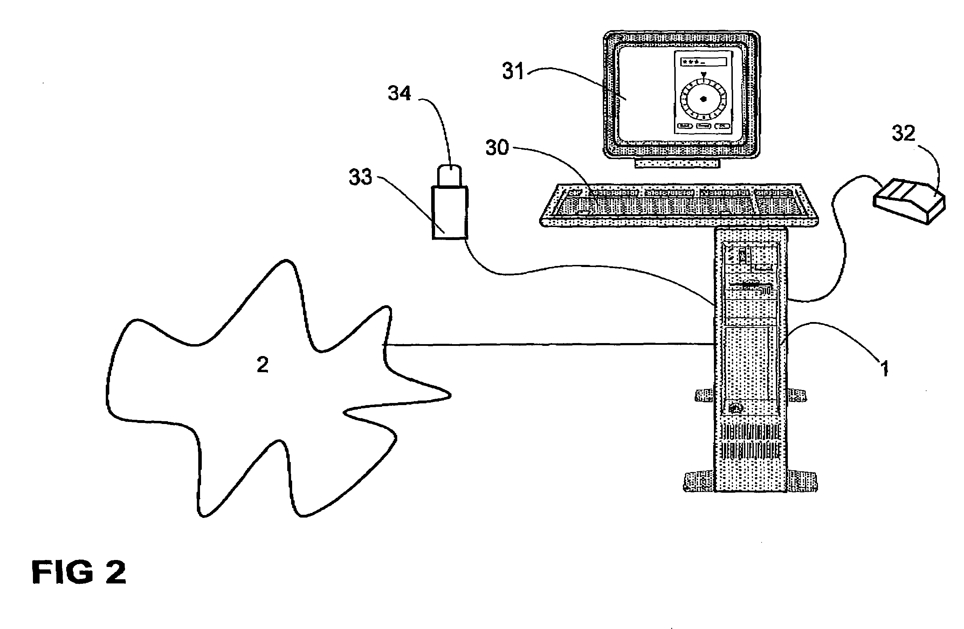

In Figur 2 sind die involvierten Komponenten für die Funktion der Benutzerschnittstelle GUI dargestellt. Ein Rechner 1 ist über eine gesicherte Verbindung mit dem Internet 2, genau mit einem Diensteanbieter 2 verbunden. Als Interaktionsmittel weist der Rechner 1, eine Tastatur 30, einen graphikfähigen Bildschirm 31, eine Maus 32 und optional einen Kartenleser 33 mit einer eingesteckten Smartcard 34 auf.

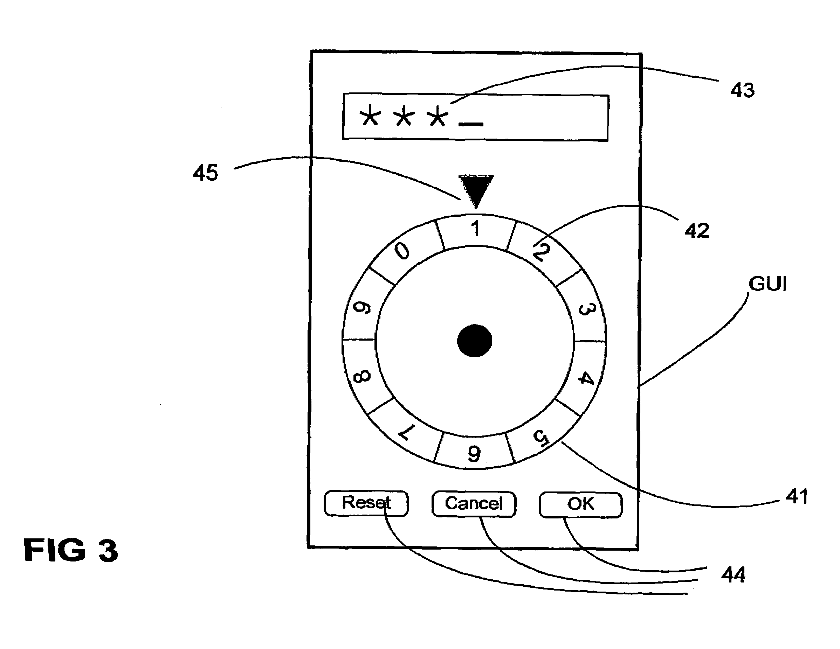

Die Eingabe eines Codes erfolgt mit Bezugnahme auf die Figur 3 wie nachstehend beschrieben. Der Code selber ist aus einer Sequenz von Zeichen 42, z.B. alphanumerischen Zeichen 42 gebildet wird.
1 Zu Beginn ist das mittels der Marke 45 eingestellte Zeichen zufällig ausgewählt. Dies wird durch zufälliges Verdrehen des äusseren Ringes bzw. Drehrades 41 erreicht. Dadurch können auch Sniffer-Programme den Wert nicht auslesen.
2 Mit der Maus 32 wird der äussere Ring 41 auf das gewünschte Zeichen 42 eingestellt; dabei bewirkt ein Drehen im Gegenuhrzeigersinn eine absteigende Folge 6 - 5 - 4 - ..., und ein Drehen im Uhrzeigersinn drehen eine aufsteigende Folge 2 - 3 - 4 - ... .
3 wenn das gewünschte Zeichen 42 erreicht ist, wird die Eingabe betätigt, beispielsweise durch Klicken auf das Zentrum des Drehrades 41. In einem zusätzlichen Feld werden die eingegebenen Zeichen 42 durch Platzhalter 43 verdeckt dargestellt; dies wird auch als gespiegelte Zeichendarstellung 43 bezeichnet. So hat der Benutzer die Kontrolle wie viele Zeichen er eingegeben hat.
4 Die vorstehenden Schritte 1 bis 3 werden so oft wiederholt, bis die gewünschte Anzahl Zeichen 42 erreicht ist. Die Eingabe wird beispielsweise durch Betätigen der Enter-Taste 44 abgeschlossen. Es sind auch andere Lösungen zur Terminierung denkbar, z.B. Doppelklick.

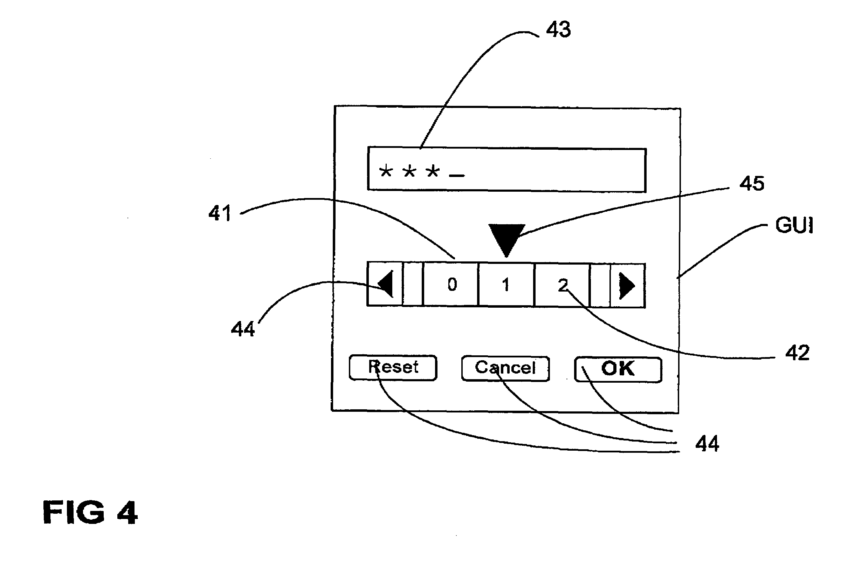

Die vorstehende Interaktion mit den Eingabemitteln ist im Detail folgender Tabelle zu entnehmen; dabei ist als zweite Ausführungsform ein verschiebbarer Balken 41 gemäss der Darstellung in Figur 4 mit integriert.

| Eingabemittel | Interaktion: | Interaktion: |
|---|---|---|
| | Absteigende Folge | Aufsteigende Folge |
| | 6 5 4 3 | 4 5 6 7 |
| Drehrad | Drehen im Gegenuhrzeigersinn | Drehen im Uhrzeigersinn |
| Balken | Schieben nach rechts | Schieben nach links |
| Maus | Linke Taste Scrollrad nach unten | Rechte Taste Scrollrad nach oben |
| Tastatur | Page Down | Page Up |
| | Pfeil nach links | Pfeil nach rechts |
| | Pfeil nach unten | Pfeil nach oben |

Der Code - auch PIN genannt - ist auf diese Art und Weise sicher eingegeben. Dieser Code kann durch Tastatur- oder Maus-Sniffer nicht erschlichen werden. Denkbar wäre eine Videoaufzeichnung, diese Gefahr ist wegen einer erforderlichen manuellen Auswertung Auswertung als vernachlässigbar zu betrachten. Denkbar wäre auch eine automatisierte Auswertung, dies ist jedoch wegen der verschiedenen verwendeten graphischen Zeichen und Mustern ausserordentlich aufwendig zu realisieren. Darüber hinaus entstehen aus einer solchen Aufzeichnung grosse Datenmengen.

Die Rekonstruktion der dargestellten Zeichen kann durch folgende Massnahmen weiter erschwert werden:
Die Zeichen sind in Frakturschrift und/oder kursiv und/oder mit sehr geringem Kontrast und/oder gegenüber einer horizontalen Basis gedreht dargestellt.

Der Code kann nun verschlüsselt entweder über den Kartenleser 33 zur Smartcard 34 oder über eine gesicherte Verbindung zu einen Dienste-Anbieter 2 übermittelt werden. Dazu werden die Verfahren Secure-Messaging - z.B. nach ISO/IEC 7816 [3] zum Verstecken der übermittelten Daten und Challenge-Resonse gegen Replay-Attacken eingesetzt.

Um diese Funktionalität für die Übermittlung zur Smartcard 33 zu gewährleisten müssen die folgenden Bedingungen erfüllt sein:
i) Die Smartcard muss speziell initialisiert sein;
ii) die Smartcard muss das Challenge-Response Protokoll unterstützen;
iii) auf dem PC muss ein Programm zur zuvor beschriebenen PIN-Eingabe installiert sein;
iv) der unterliegende Smartcard-Treiber muss Secure-Messaging unterstützen.

Die weit verbreiteten einfachen Smartcard-Leser 33 ohne Tastatur (= Klasse 1) können mit der oben beschriebenen Ergänzung (fast) wie ein Smartcard-Leser mit Tastatur (= Klasse 2) eingesetzt werden.

Die vorstehend beschriebene Ausführungsform einer Benutzerschnittstelle GUI stellt lediglich ein Beispiel dieser Erfindung dar. Die Zeichen brauchen nicht Ziffern zu sein, sondern können auch alphanumerische Zeichen sein. Auch sind andere Formen als ein Drehrad 41 denkbar, z.B. ein Balken mit Zeichen 42 der durch Mausbewegungen verschoben werden kann. Ebenso brauchen die Zeichen 42 nicht wie vorstehend erläutert in einer Ordnung, d.h. aufsteigend oder absteigend angeordnet zu sein. Von besonderer Bedeutung ist jedoch die zufällige Startposition, als das Zeichen 42 welches zu Beginn der Eingabe eines Codes der Marke 45 zugeordnet ist.

Ebenso können die am Bildschirm angegebenen Zeichen 42 nicht nur mit einer Computermaus 32 angewählt und ggf. aktiviert werden, sondern dies kann auch mit z.B. den Pfeiltasten auf einer Tastatur oder direkt auf dem Bildschirm, beispielsweise mit einem sogenannten Touchscreen. Diese verschiedenen Eingabemöglichkeiten werden im Sinne dieser Schrift mit dem Begriff Eingabemittel 32 subsumiert.

### Liste der verwendeten Abkürzungen, Bezeichnungen und Akronyme

GUI Graphical User Interface
PIN Personal Identification Number
TLS Transport Layer Socket
WLAN Wireless Local Area Network
WPA2 Wi-Fi Protected Access mit AES Verschlüsselung

### Liste der verwendeten Bezugszeichen

- 1: Rechner, kompromittierter Rechner
- 2: Dienste-Anbieter; Service-Provider; Internet
- 15: gesicherte Kommunikationsverbindung SSL/TLS
- 16: verschlüsselt, encrypted
- 17: ungeschützt, decrypted
- 18: gesicherte End zu Endverbindung
- 19: Übliche Verbindung Tastatur - Rechner
- 20: Alternative Verbindung Tastatur - Kommunikationsgerät - Rechner
- 21: HTTP-Filter, Teil von Malware
- 22: HTTP-Replace Engine, Teil von Malware
- 23: Anwendung, z.B. Browser
- 24: Key-Logger, Teil von Malware
- 25: Key-Replace-Engine, Teil von Malware
- 26: videomaskierung, Teil von Malware
- 30: Tastatur
- 31: Bildschirm
- 32: Computermaus; Computer Mouse; Eingabemittel
- 33: Kartenleser
- 34: Karte, Smartcard
- 40: Benutzer, Person
- 41: graphische Darstellung; Drehrad; Balken
- 42: Zeichen
- 43: gespiegelte Zeichen; Platzhalter
- 44: Buttom zur Interaktion; Enter-Taste, OK-Taste
- 45: Marke
- Att1, Att2, Att3: (logische) Zugangs- oder Angriffspunkte auf einen kompromittierten Rechner
- Att: Physischer Zugangs- oder Angriffspunkt von aussen über ein Port ausserhalb der gesicherten Kommunikationsverbindung.

### Liste der zitierten Dokumente

[1] EP 1 713 230 Al
   «System and method for providing user's security when setting-up a connection over insecure networks» AXSionics AG, 2502 Biel (CH)
   Berner Fachhochschule
   Hochschule für Technik und Architektur, 2501 Biel (CH)
[2] EP 1 255 178 B1
   «Dispositif de sécurité pour transaction en ligne» Berner Fachhochschule
   Hochschule für Technik und Architektur, 2501 Biel (CH)
[3] ISO/IEC 7816-4: 1997
   Amendment 1: Identification cards: Integrated circuit(s) cards with contacts - Impact of secure messaging on the structures of APDU messages

## Patentansprüche

1. Benutzerschnittstelle (GUI) zur Eingabe eines Codes; wobei der Code durch eine Sequenz von Zeichen gebildet wird und die Benutzerschnittstelle (GUI) einen Rechner (1), einen Bildschirm (31) und ein Eingabemittel (32)umfasst;
**dadurch gekennzeichnet, dass**
am Bildschirm (31) in einer graphischen Darstellung (41) Zeichen (42) enthalten sind, wobei die dargestellten Zeichen im Rechner (1) als graphische Elemente repräsentiert sind, die am Bildschirm (31) mittels eines Eingabemittels (32) anwählbar und aktivierbar sind zur Bildung einer Sequenz von Zeichen (42), um damit einen Code eingebbar zu machen.

2. Benutzerschnittstelle (GUI) nach Anspruch 1,
**dadurch gekennzeichnet, dass**
die graphische Darstellung (41) ein die Zeichen (42) enthaltendes Drehrad (41) beinhaltet, welches mit dem Eingabemittel (32) positionierbar ist.

3. Benutzerschnittstelle (GUI) nach Anspruch 1,
**dadurch gekennzeichnet, dass**
die graphische Darstellung (41) ein die Zeichen (42) enthaltendes Rechteck (41) beinhaltet, welches mit dem Eingabemittel (32) verschiebbar ist.

4. Benutzerschnittstelle (GUI) nach Anspruch 2 oder 3,
**dadurch gekennzeichnet, dass**
das erste bei einer Marke (45) ausgebene Zeichen (42) einen zufälligen Inhalt aufweist.

5. Benutzerschnittstelle (GUI) nach einem der Ansprüche 1 bis 4,
**dadurch gekennzeichnet, dass**
die graphische Darstellung (41) am Bildschirm nur eine Teilmenge aller zur Eingabe eines Codes benötigten Zeichen (42) enthält.

6. Benutzerschnittstelle (GUI) nach einem der Ansprüche 1 bis 5,
**dadurch gekennzeichnet, dass**
die graphische Darstellung (41) am Bildschirm ausgegebene Zeichen (42) in einer zufälligen Reihenfolge enthält.

7. Benutzerschnittstelle (GUI) nach einem der Ansprüche 1 bis 6,
**dadurch gekennzeichnet, dass**
nach einer erfolgten Eingabe eines Zeichens (42) das nächste bei einer Marke (45) ausgebene Zeichen (42) einen zufälligen Wert aufweist.

8. Benutzerschnittstelle (GUI) nach einem der Ansprüche 1 bis 7,
**dadurch gekennzeichnet, dass**
am Rechner (1) ein mit einer Smartcard (34) versehener Kartenleser (33) angeschlossen ist, wobei der eingegebene Code zur Verifikation an die Smartcard (34) übermittelt wird.

9. Benutzerschnittstelle (GUI) nach Anspruch 8,
**dadurch gekennzeichnet, dass**
die Smartcard (34) ein Challenge-Response-Protokoll unterstützt und die Kommunikation zwischen Rechner (1) und Smartcard (34) ein Challenge-Response-Protokoll benutzt und nach dem Secure-Messaging-Verfahren erfolgt.

10. Benutzerschnittstelle (GUI) nach einem der Ansprüche 1 bis 9,
**dadurch gekennzeichnet, dass**
die in der graphischen Darstellung (41) ausgebenen Zeichen (42) in Frakturschrift und/oder kursiv und/oder mit sehr geringem Kontrast und/oder gegenüber einer horizontalen Basis gedreht dargestellt sind.
